# EUROPÄISCHE PATENTANMELDUNG

(11) **EP 3 702 830 A1**
(43) Veröffentlichungstag der Anmeldung: **02.09.2020**
(21) Anmeldenummer: 20160518.5
(22) Anmeldetag: 02.03.2020
(51) Int. Cl.: G02C 7/10, G02B 5/28

(54) **BRILLENGLAS MIT INFRAROTABSORBIERENDER BESCHICHTUNG**

(30) Priorität: 01.03.2019 DE 102019105313; 14.05.2019 DE 102019112592
(71) Anmelder: Wetzlich Optik-Präzision GmbH, 41748 Viersen (DE)
(72) Erfinder: GISCH, Florian, 41748 Viersen (DE)
(74) Vertreter: Bonsmann, Joachim Bernhard

(57) **Zusammenfassung**

Ein Brillenglas mit einer organischen oder mineralischen Brillenglas-Basis und optional mit einer in die Basis eingebrachten Tönung zur Verwendung des Brillenglases als Sonnenschutzglas, weist eine Beschichtung zum Schutz vor Infrarot-Strahlung, insbesondere vor Infrarot-A-Strahlung und vor Infrarot-B-Strahlung auf, wobei die Beschichtung entweder aus einem jeweils auf beide Seiten der Brillenglas-Basis aufgebrachten Interferenz-Schichtenstapel besteht, oder durch eine metallische Beschichtung mit darauf folgender Anti-Reflexionsschicht gebildet wird. Weiterhin wird die Verwendung eines getönten Sonnenschutzglases mit IR-A/IR-B-Filtern sowie insbesondere die Verwendung eines Brillenglases mit IR-Schutz im Nachgang zu Kataraktoperationen vorgeschlagen.

## Beschreibung

Die vorliegende Erfindung betrifft ein Brillenglas mit infrarotabsorbierender Beschichtung, insbesondere für Sonnenschutzbrillen.

Da gewisse Bestandteile des Auges - wie die Netzhaut- auch auf lange Sicht medizinisch nicht "reparabel" sein werden, gilt es, Degenerationseffekte des Auges durch belastende Umwelteinflüsse so gering wie möglich zu halten, insbesondere in Anbetracht der steigenden Lebenserwartung der Menschen.

Bereits Anfang des 20 Jahrhunderts gab es Erkenntnisse, dass ultraviolettes Licht eine schädigende Wirkung auf das Auge haben kann. 1908 gelang dem Schweizer Ophtalmologen Alfred Vogt der Nachweis hierfür. Damals wurde bereits darauf verwiesen, dass Infrarotstrahlen einen ähnlich schädigenden Effekt wie UV-Strahlung haben sollten.

Im Jahre 1930 wurden die ersten Sonnenbrillen in Serie hergestellt, bei denen der Blendschutz im Vordergrund stand.

Neben dem modischen Aspekt der Sonnenbrille entwickelten sich Schutznormen, wie zuletzt der Standard EN1836, der von einem vollständigen UV-Schutz spricht, sobald eine Absorption von 95% im Bereich bis 380nm vorliegt. Der UV-Schutzstandard, der auch bereits bei vielen Endverbrauchern bekannt ist und auch von diesen nachgefragt wird, ist mittlerweile das sog. UV400-Siegel, bei dem bereits in den sichtbaren Spektralbereich eingegriffen wird und ebenso schädliches hochfrequentes Blaulicht geblockt wird.

Bislang wurde jedoch der Schutz vor Infrarotstrahlung eher vernachlässigt, obwohl die Infrarotstrahlung immerhin über 40% des Sonnenlicht-Spektrums repräsentiert.

Da konventionelle Sonnenbrillen den Bereich der Infrarotstrahlung bislang so gut wie nicht absorbieren, trifft die Infrarotstrahlung - im Gegensatz zum UV-Licht - bei bekannten Sonnenbrillen nahezu ungefiltert auf das Auge.

Der Infrarot-Spektralbereich wird üblicherweise in nahes Infrarot (NIR) im Bereich von ca. 780 nm (die Untergrenze von 780 nm stellt in etwa die physiologische Grenze des Sehsinns dar) bis ca. 3000 nm, sowie mittleres Infrarot (MIR) von 3000 nm bis 50.000 nm und fernes Infrarot (FIR) von ca. 50.000 nm bis etwa 1·10⁶ nm aufgeteilt. Letztere beiden Bereiche MIR und FIR werden auch zusammenfassend als IR-C bezeichnet.

Im Bereich des nahen Infrarots (NIR) wird üblicherweise noch zwischen Infrarot-A- oder kurz IR-A zwischen ca. 780 nm und ca. 1400 nm und Infrarot-B oder IR-B mit ca. 1400 nm bis ca. 3000 nm unterschieden. Die Grenze zwischen dem kurzwelligeren IR-A-Bereich und dem langwelligeren IR-B-Bereich wird an dem deutlichen Anstieg der Absorption von Wasser bei ca. 1450 nm festgemacht.

Im Rahmen der vorliegenden Erfindung wurde erkannt, dass das Problem möglicher gesundheitlicher Probleme durch Infrarotstrahlung bei Sonnenbrillen mit getönten, absorbierenden Gläsern besonders relevant ist, da die reduzierte Helligkeit im sichtbaren Bereich deutlich weiter geöffnete Pupillen zur Folge hat, so dass die Infrarotanteile der Strahlung in stärkerem Maße die besonders sensiblen Strukturen des Auges erreichen können.

Laut Erkenntnissen des Fachverbandes für Strahlenschutz können Infrarotstrahlen mit einer Wellenlänge zwischen 780 nm und 10.000 nm das Auge deutlich schädigen. Im Gegensatz zu UV-Strahlung reicht die Energie der IR-Strahlung zwar nicht aus, um photochemische Reaktionen hervorzurufen, die Strahlen können jedoch zu einer deutlichen Erwärmung des Augeninnern führen.

Der im Sonnenlicht dominante IR-A Anteil dringt im Bereich bis 1.400 nm mit einem signifikanten Anteil bis zur Netzhaut durch. Das ergibt sich aus der allgemeinen Regel, wonach je kurzwelliger die IR-Strahlung ist, desto größer die Eindringtiefe. Insbesondere betroffen hiervon ist die Chorioidea (Aderhaut), die Schädigungen aufgrund von IR-A davontragen kann und somit auch lokale Gewebsdefekte der Retina (Netzhaut).

Durch die Hornhaut gelangt von Strahlung, die langwelliger ist als ca. 2000 nm, nur ein kleiner Anteil. Die vordere Augenkammer absorbiert somit nahezu sämtliche Strahlung über 2000 nm. Durch Linse und Glaskörper werden außerdem nahezu alle Wellenlängen größer 1400 nm weitgehend herausgefiltert.

Auf die Retina kann somit im Wesentlichen Strahlung im Wellenlängenbereich von 400 nm bis 1400 nm fallen. Die Energie der Infrarotstrahlung, die das Auge absorbiert, führt dort zu einer Erwärmung.

Es wird weiterhin vermutet, dass Langzeit-IR-Strahlungseinwirkung eine Trübung der Augenlinse (Katarakt) begünstigen kann, ungeachtet vieler anderer Faktoren - wie z.B. Umwelteinflüsse -, die hierfür eine Rolle spielen können. Nicht ohne Grund spricht man von einem "Glasbläserstar", sodass ein Einfluss der Infrarotstrahlung auf die Kataraktbildung, wenn auch experimentell schwer nachweisbar, doch als sehr wahrscheinlich gilt.

Weiterhin stellt die zur Behandlung der vorstehend erwähnten Augenlinsentrübung verwendete Katarakt-OP mit dem Einsetzen einer künstlichen Augenlinse eine der an den häufigsten vorgenommenen Operationen dar.

Der Erfindung liegt die Aufgabe zugrunde, ein Brillenglas, besonders bevorzugt ein solches für den Sonnenschutzbereich, zu schaffen, das einen möglichst effizienten Schutz vor IR-Strahlung bei gleichzeitig guten optischen Eigenschaften (insbesondere hinsichtlich der Farbwiedergabe) im sichtbaren Bereich gewährleistet.

Eine weitere Aufgabe der Erfindung besteht darin, ein Brillenglas - für den Sonnenschutzbereich oder ungetönt - zu schaffen, das besonders für Patienten nach einer Katarakt-OP vorteilhaft ist. Ein besonderer Bedarf in diesem Einsatzgebiet wird deshalb gesehen, weil im Rahmen der Erfindung gängige Intraokularlinsen auf ihre Infrarotschutzeigenschaften getestet wurden und diese deutlich schlechtere IR-Absorptionseigenschaften aufweisen als die natürliche Augenlinsen.

Die Lösung der vorgenannten Aufgabe erfolgt mittels eines Brillenglases mit den Merkmalen des Patentanspruches 1 sowie durch die Verwendung eines Brillenglases gemäß den Patentansprüchen 12 bzw. 13.

Vorteilhafte Ausgestaltungen der Erfindung sind in den abhängigen Patentansprüchen beschrieben.

Erfindungsgemäß wird ein Brillenglas mit einer vorzugsweise organischen (Kunststoff) oder mit einer mineralischen Brillenglas-Basis, und ggf. mit einer in die Basis eingebrachten Tönung zur Verwendung des Brillenglases als Sonnenschutzglas, vorgeschlagen, wobei das Brillenglas eine Beschichtung zum Schutz vor wenigstens Infrarot-A-Strahlung und zusätzlich zum Schutz vor Infrarot-B-Strahlung (wenigstens in spektralen Teilbereichen) aufweist.

Dem IR-B Bereich kommt hierbei insbesondere im Hinblick auf den Schutz der Linse eine besondere Bedeutung zu, da diese signifikant Wellenlängen bis 2000 nm ausgesetzt ist.

Grundsätzlich werden im Rahmen der vorliegenden Erfindung zur Erzielung einer derartigen Beschichtung **zwei Wege** aufgezeigt:
**Bei einer ersten Alternative (a) wird zur Bereitstellung eines getönten Brillenglases** mit zusätzlicher Schutzwirkung im IR-A- und IR-B-Bereich eine ***Metallschicht*** auf das Brillenglas aufgebracht.

Das Aufbringen einer Metallschicht, beispielsweise aus Silber, ist im Bereich der Brillenglasbeschichtungen grundsätzlich bekannt, insbesondere um ein **verspiegeltes** Sonnenschutzglas herzustellen.

Diese außen mit der Metallschicht versehenen Gläser wirken für den Betrachter aufgrund der Abdunklung des Glases, auch wenn die Verspiegelung einen nur relativ geringen Reflexionsgrad von z.B. ca. 20% aufweist, von außen wie ein undurchlässiger Spiegel, so dass die durch die Brille abgedunkelte Augenpartie des Trägers praktisch nicht erkennbar ist.

Derartige Gläser - ggf. mit eingefärbten Verspiegelungen, Farbverläufen, etc. - stellen jedoch eher modische Nischenprodukte dar oder werden bevorzugt für bestimmte Sportbrillen eingesetzt.

Im Rahmen der vorliegenden Erfindung soll hingegen keine von außen sichtbare auffällige Verspiegelung erzeugt werden, sondern es soll die physikalische Eigenschaft ausgenutzt werden, dass dünne Schichten bestimmter Metalle über weite Wellenlängenbereiche gute Infrarotabsorber sind, und dies teilwiese mit einem relativ variationsarmen Verlauf über den fraglichen Wellenlängenbereich.

Dies ist vor allem dadurch bedingt, dass dünne Schichten bestimmter Metalle im IR-Bereich einen relativ hohen und teilweise über die Frequenz nur schwach variierenden Absorptionskoeffizienten aufweisen. Der Absorptionskoeffizient *κ* (bzw. k) entspricht dem Zahlenwert des Imaginärteils des komplexen Brechungsindizes eines Metalls; es handelt sich in diesem Falle um eine dimensionslose Größe.

Die wellenlängenabhängigen Verläufe des Absorptionskoeffizienten sowie des Brechungsindex lassen sich für viele Metalle und andere in der Augenoptik verwendete Grund- und Beschichtungsstoffe der Literatur entnehmen, z.B. hinsichtlich einer begrenzten Auswahl optischer Materialien anhand der Internet-Datenbank *https:llwww.filmetrics.de*/*refractive-index-database.*

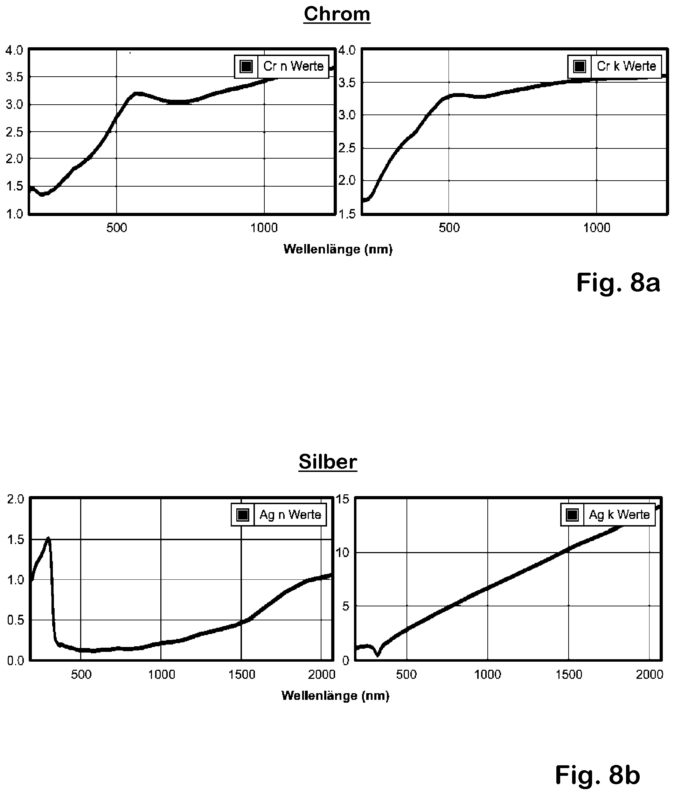

In den Figuren 8a und 8b sind beispielhaft die Brechungsindexverläufe (*n*) und die Absorptionskoeffizientenverläufe (*k*) für metallisches Chrom (vgl. Figur 8a) und metallisches Silber (vgl. Figur 8b) im Wellenlängenbereich 200 nm bis 1240 nm bei Raumtemperatur dargestellt; diese Diagramme wurden der vorstehend zitierten Internet-Datenbank entnommen.

Wie ersichtlich, steigen die Absorptionskoeffizienten für Chrom bis ca. 520 nm relativ steil auf einen Wert von über 3,0 an. Oberhalb eines lokalen Maximums bei ca. 520 nm ändert sich der Absorptionskoeffizient dann nur noch relativ geringfügig.

Bei Silber ist ab ca. 350 nm ein kontinuierlicher, näherungsweise linearer Anstieg des Absorptionskoeffizienten zu beobachten. Bei 550 nm liegt der Absorptionskoeffizient für Silber ebenfalls oberhalb eines Wertes von 3,0.

Für andere in der Augenoptik verwendete Materialien, wie z.B. SiO₂, zeigt sich z.B. dagegen ein praktisch vernachlässigbarer Absorptionskoeffizient (nahezu 0). Diese Materialien zeichnen sich allein durch die Variation des optischen Brechungsindizes aus und wären für die vorliegende Erfindung als IR-Absorptionsschicht weniger geeignet.

Die Eignung eines Metalls (oder einer Metallverbindung) als IR-A- und IR-B-Absorber soll im Rahmen der Erfindung an einem - grundsätzlich willkürlich festgelegten Kriterium - festgemacht werden, wonach das Metall oder die Metallverbindung in einem Wellenlängenbereich zwischen 550 nm und1000 nm (d.h. vom optischen Bereich bis in den IR-B-Bereich hinein) einen optischen Absorptionskoeffizienten *κ* ≥ 1 aufweisen soll.

Die Grenze "1" ist - wie erwähnt - letztlich willkürlich gewählt. Für die oben diskutierten Beispiele Chrom und Silber könnte die Grenze auch höher gesetzt werden, z.B. 1,25, 1,5 oder 2,0, auch diese Absorptionskoeffizientenwerte könnten zur Auswahl geeigneter Metalle herangezogen werden.

Dabei kann die Metallschicht optional ganz oder teilweise in oxidischer Form, ggf. mit Oxiden in unterschiedlichen Oxidationsstufen, vorliegen. Die Verwendung von Metalloxiden ist bei optischen Beschichtungen nicht unüblich, denn mit dem Oxidanteil kann die Transmission und die Farbwirkung einer bestimmten Schicht variiert werden.

Die Dicke bzw. Stärke der aufdeponierten Metallschicht soll im Rahmen der Erfindung zwischen 0,5 nm bis 20,0 nm liegen, wobei je nach Material eine Dicke von 0,5 nm (5 Angström) noch praktisch keine optische Wirkung haben kann und 20 nm (200 Angström) z.B. für Chrom schon zu stark sein kann, um noch eine nennenswerte Rest-Transmission zu gewährleisten. Je nach Metall können die erforderlichen Schichtdicken aber deutlich variieren. Die konkrete Dicke wird anhand des Materials und des gewünschten Tönungsgrades eingestellt.

Gemäß der Erfindung soll die spiegelnde Wirkung der Metallschicht, die auf der Brillenglasinnenseite aufgebracht wird, durch wenigstens eine außerdem aufgebrachte Antireflex-Beschichtung wenigstens teilweise wieder aufgehoben werden.

Somit sieht der Brillenträger und auch der äußere Betrachter die Reflexwirkung der Metallschicht nicht mehr oder kaum noch; und das Brillenglas wirkt in etwa wie ein übliches gefärbtes Sonnenbrillenglas, wobei jedoch ein deutlich besserer Schutz vor Infrarotstrahlung gewährleistet werden kann.

Die Antireflex-Beschichtung wird bevorzugt so ausgestaltet, dass diese in etwa die Performance einer Antireflex-Beschichtung bei einem üblichen Brillenglas ohne Metallbeschichtung bietet, wobei dies in der Regel nicht ganz gewährleistet werden kann. Erzielt man mit einer hochwertigen Entspiegelung bei einem üblichen Brillenglas Restereflexionsgrade von 0,2% bis 1,0%, so erreicht man erfindungsgemäß in der Regel Rest-Reflexionsgrade von 2,0% bis 3,0%, was aber in der Praxis (insbesondere rückseitig) als ausreichend entspiegelt empfunden wird.

Besonders bevorzugt ist die Metallschicht aus Chrom, optional enthaltend ein oder mehrere Chromoxide CrO, Cr₂O₃, CrO₂, CrO₃, gebildet, mit einer Schichtdicke von 0,5 nm bis 20,0 nm, besonders bevorzugt mit einer Schichtdicke von 2,0 nm bis 9,0 nm, ganz besonders bevorzugt mit einer Schichtdicke von 6,0 nm bis 8,0 nm.

Alternativ wäre eine Metallschicht aus Silber, optional enthaltend Silberoxide, oder aus Titan oder aus einem Titanoxid, insbesondere aus Ti₂O₅, denkbar. Grundsätzlich wären, abgesehen von den schon erwähnten Oxiden, auch die Verwendung anderer Metallverbindungen oder auch von verschiedenen Metallen denkbar, sofern damit vergleichbare optische Eigenschaften erzielt werden.

Konkret kann ein bevorzugter Schichtaufbau mit Metallschicht auf einer Brillenglasbasis (mineralisch oder organisch) wie folgt gestaltet sein:
(i) die Metallschicht ist auf die Innenseite der Brillenglasbasis aufgebracht,
(ii) optional kann nach innen hin - folgend auf die Metallschicht - ein Interferenz-Schichtenstapel zur Implementierung einer gewünschten farblichen Anpassung der durch die Metallschicht vorgegebenen Tönung vorgesehen sein,
(iii) nach innen hin folgend ist ein Interferenz-Schichtenstapel vorgesehen, der die Antireflex-Beschichtung implementiert, und
(iv) optional ist auf der inneren Oberfläche des Brillenglases eine Schutzbeschichtung vorgesehen.

Die Außenseite des Brillenglases kann auch entsprechende Beschichtungen, z.B. ebenfalls eine Entspiegelung, aufweisen.

Besonders bevorzugt ist die Glasbasis zur Erzielung eines homogenen farblichen Gesamteindrucks zusätzlich tauchgefärbt.

Ferner kann die Brillenglasbasis zur Erzielung stärkerer Tönungen oder zur Erzielung von Farbverläufen zusätzlich mit einer durchgefärbten Tönung versehen sein. In einer bevorzugten Ausführungsform ist auf einer Brillenglasbasis aus einem Polymermaterial folgender Schichtaufbau gemäß **Tabelle 1** vorgesehen, ausgehend von der Basis zur inneren Seite hin, wobei auch noch weitere Schichten (z.B. auf der Glasbasisaußenseite) vorgesehen sein können, und wobei die genannten bevorzugten Schichtdicken um ± 20% variieren können:

**(Tabelle 1)**

| **Schicht Nr.** | **Material** | **bevorzugte Schichtdicke [nm]** |
|---|---|---|
| 1 | Chrom | 6,0-8,0 |
| 2 | SiO₂ | 45,1 |
| 3 | TiO₂ | 10,0 |
| 4 | SiO₂ | 50,5 |
| 5 | TiO₂ | 10,0 |
| 6 | SiO₂ | 12,9 |
| 7 | TiO₂ | 9,5 |
| 8 | SiO₂ | 106,9 |
| 9 | ZrO₂ | 14,1 |
| 10 | SiO₂ | 70,3 |
| 11 | ZrO₂ | 67,3 |
| 12 | SiO₂ | 113,0 |
| 13 | "Topcoat" | 10,0 |

In diesem Falle ist die Schicht Nr. 1 die direkt auf die Brillenglasbasis innenseitig (d.h. bei bestimmungsgemäßer Benutzung zum Auge des Benutzers hin) aufgebrachte Chromschicht.

Das Brillenglas wurde bevorzugt vor Aufbringung der Metallschicht in einer gewünschten Tönungsfarbe tauchlackiert. Diese Tauchlackierungsschicht ist so dünn, dass sie die Transmissionseigenschaften des Brillenglases nur geringfügig ändert, diese sorgt aber für einen sehr homogenen optischen Gesamteindruck.

Anstelle des in vorstehendem beispielhaften Schichtaufbaus vorgeschlagenen elementaren Chroms kann selbstverständlich auch eine Chrom-/Chromoxidmischung oder ein anderes Metall oder Metalloxid verwendet werden, wobei die Metallschichtdicke und in aller Regel auch die übrigen Schichtdicken anzupassen sind.

Ein Aspekt bei einer besonders bevorzugten Ausführungsform der vorliegenden Erfindung kann darin gesehen werden, dass eine IR-reduzierende Metallbeschichtung mit einer Antireflexbeschichtung und einer Tauchlackierung der Brillenglasbasis kombiniert wird.

Die Schichten Nr. 2 bis Nr. 8 mit wechselnden SiO₂ / TiO₂-Schichten dienen primär einer vorgegebenen Farbanpassung; so ist z.B. der Farbeindruck einer reinen Chromschicht eher grau, was durch die obigen Schichten z.B. in Richtung grün korrigiert werden kann.

Die Schichten Nr. 9 bis Nr. 12 mit alternierenden ZrO₂ / SiO₂-Schichten stellen eine an die optischen Erfordernisse Metallbeschichtung angepasste Antireflex-Beschichtung dar. Im Gegensatz zu üblichen Antireflex-Beschichtungen (d.h. ohne Metallschicht) sind hier relativ große Schichtdicken erforderlich, um die durch die Metallschicht verursachten Reflexionen möglichst wieder (abgesehen von den erwähnten Restreflexionen) auszugleichen.

Abgeschlossen wird der Schichtenstapel durch eine Schutzschicht ("Topcoat") Nr. 13, die u.a. die Kratzfestigkeit erhöht sowie hydrophobe, schmutzabweisende und antistatische Eigenschaften bereitstellt.

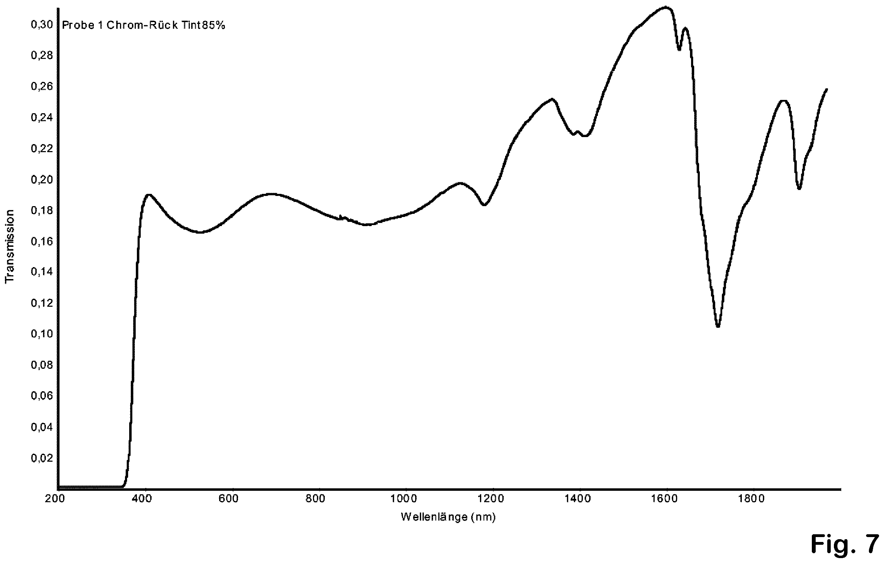

Der vorbeschriebene Schichtaufbau bietet einen wirksamen IR-A- und IR-B-Schutz (vgl. Figur 7). Auch ist die Farbwiedergabe dadurch, dass die Tönung nicht wie bei konventionellen Sonnenbrillen durch eine Glaseinfärbung, sondern durch eine - je nach Metall - eine einen sehr gleichmäßigen Frequenzgang aufweisende Metallschicht erreicht wird, tendenziell gleichmäßiger.

**Bei einer zweiten Alternative (b) ist zur Bereitstellung eines getönten oder eines ungetönten Brillenglases** mit zusätzlicher Schutzwirkung im IR-A- und IR-B-Bereich, ein jeweils auf beide Seiten - der ggf. getönten - Brillenglas-Basis aufgebrachter Interferenz-Schichtenstapel vorgesehen.

Die Beschichtung besteht aus einem jeweils auf beide Seiten der Brillenglas-Basis aufgebrachten Interferenz-Schichtenstapel, wobei jeder Schichtenstapel wenigstens acht übereinanderliegende Schichten aufweist, und wobei jeder Schichtenstapel jeweils abwechselnd eine Schicht aus einem Material mit einem hohen Brechungsindex n > 1,8 und eine Schicht aus einem Material mit einem niedrigen Brechungsindex n < 1,65 aufweist, wobei jede Schicht eine Dicke zwischen 10 nm und 200 nm aufweist.

Die Wirkung dieser Schichtenstapel soll derart sein, dass durch die gesamte Beschichtung auf beiden Seiten ein Reflexionsgrad - gemessen senkrecht zur Glasoberfläche - über den Wellenlängenbereich der Infrarot-A-Strahlung von 780 nm bis 1400 nm von durchschnittlich wenigstens 30 %, mit einem Reflexionsgradmaximum in diesem Wellenlängenbereich von wenigstens 55%, erreicht wird.

Im IR-B-Teilbereich zwischen 1400 nm und 2000 nm wird außerdem im Mittel ein Transmissionsgrad von 75% oder geringer, vorzugsweise von 60% oder geringer, besonders bevorzugt von 55% oder geringer, erzielt, jeweils ohne Berücksichtigung einer möglichen Glastönung ("weißes Glas", wobei die quantitative Wirkung der Tönung in diesem Spektralbereich sowieso eher vernachlässigbar ist). In einem Ausführungsbeispiel betrug der mittlere Transmissionsgrad in diesem Teilbereich des IR-B 51%.

In Anbetracht des Umstandes, dass manche Glasbasismaterialien bei ca. 1600 nm einen - quantitativ begrenzten - Einbruch bei der Transmission aufweisen (ohne dass irgendwelche Infrarotfiltermaßnahmen erforderlich wären), kann der vorstehend beschriebene Transmissionsgrad (75% bzw. 60% bzw. 55%) auch nur für den Anfangs-Wellenlängenbereich des IR-B-Bereichs von 1400 nm bis ca. 1550 nm gefordert werden.

Wenngleich im Ausführungsbeispiel auf beiden Seiten je acht Schichten vorhanden sind, wäre es grundsätzlich auch denkbar, dass die genannten Schichten anders auf beide Seiten verteilt werden, z.B. 10 Schichten (oder mehr) auf der einen und für nur 6 Schichten auf der anderen Seite; in der Summe der Schichtpakete auf beiden Seiten sind vorteilhafterweise wenigstens 16 Schichten für die IR-Unterdrückung vorgesehen.

Die Erfindung konzentriert sich in beiden Varianten auf das Herausfiltern des IR-A und des unteren (d.h. kurzwelligeren) IR-B Spektrums, weil nahezu alle anderen IR-Bestandteile des natürlichen Lichtes bereits durch die Vorderkammer des Auges absorbiert werden.

Vorteilhafterweise werden aber auch langwelligere IR-Anteile im IR-B-Bereich wenigstens partiell unterdrückt, um so u.a. die absorptionsbedingte Erwärmung der Vorderkammerstrukturen des Auges zu reduzieren. Besonders bevorzugt konzentriert sich die Schutzwirkung im Infrarot-B-Bereich auf den kurzwelligeren Bereich zwischen ca. 1400 nm und ca. 2000 nm, also den Bereich, im dem die IR-Strahlung ansonsten primär durch die wasserhaltigen biologischen Strukturen der Linse und des Glaskörpers absorbiert wird.

Im Vergleich dazu liegen die mittleren Transmissionsgrade im sichtbaren Bereich (400 nm bis 780 nm) in einem Ausführungsbeispiel bei beiden Varianten der Erfindung bei 92%, typischerweise bei über 90%; auch hier ohne Berücksichtigung einer Tönung.

Bevorzugt ist ferner vorgesehen, dass bei beiden Varianten der senkrecht zur Glasoberfläche gemessene, durch die Beschichtung auf beiden Seiten insgesamt bedingte Reflexionsgrad im Wellenlängenbereich des sichtbaren blauen Lichts zwischen 410 nm und 460 nm den Wert 10%, vorzugsweise den Wert 5%, nicht übersteigt, bzw. die Transmission in diesem Bereich bei wenigstens 90%, vorzugsweise bei wenigstens 95% liegt. Dies bewirkt eine bessere Farbwiedergabe als bei bekannten Gläsern.

Die Basis des Brillenglases besteht bei der Interferenzfiltervariante (b) bevorzugt aus einem Polymermaterial und das Basismaterial weist bevorzugt eine sichtbares Licht absorbierende Färbung mit einem grauen, braunen oder grünen Farbton auf, die eine durchschnittliche Absorption von wenigstens 50%, vorzugsweise von mehr als 80%, besonders bevorzugt von ca. 85 % im sichtbaren Wellenlängenbereich bewirkt (Gesamtabsorption, einschließlich der Wirkung der Brillenglasbeschichtungen). Für derartige Sonnenbrillen ist die besagte IR-Schutzbeschichtung - wie vorstehend schon erwähnt - besonders zweckmäßig, da durch die Absorption im Sichtbaren die Pupillen in der Regel weit geöffnet sind.

Brillen mit einer derartigen Tönung eignen sich allerdings in der Regel nicht für nächtliche Autofahrten bei Dunkelheit, da ein Tönungsgrad von 50% hierzu in der Regel zu hoch ist.

Bevorzugt sind die Schichten mit niedrigem Brechungsindex n < 1,65 aus einem oder mehreren Materialien aus der Gruppe von Materialien, gebildet aus SiO₂, MgF₂, Al₂O₃, LaF₃ oder einer Mischung dieser Materialien, gebildet. Besonders bevorzugt wird SiO₂ (Brechungsindex ca. 1,5) verwendet. Die Schichten mit hohem Brechungsindex *n* > 1,8 können bevorzugt aus einem oder mehreren Materialien aus der Gruppe von Materialien gebildet aus Oxiden, Nitriden oder Oxinitriden der Stoffe Zr, Ti, Sb, In, Sn, Ta, Nb, Hf oder einer Mischung dieser Materialien gebildet sein. Besonders bevorzugt wird ZrO₂ oder TiO₂ verwendet, wobei ZrO₂ bevorzugt für die erste Schicht angrenzend an die Basis verwendet wird, weil dies eine optimale Schichthaftung gewährleistet. Für die weiteren Schichten mit hohem Brechungsindex wird bevorzugt TiO₂ eingesetzt. Alternativ können auch Zwischenschichten mit einem Material aus einem mittleren Brechungsindexbereich vorgesehen sein.

Bevorzugt ist bei der Interferenzfiltervariante (b) die unmittelbar an die Brillenglasbasis angrenzende Schicht jeweils aus ZrO₂ mit einer Schichtdicke zwischen 5 nm und 50 nm gebildet, und die übrigen Schichten mit hohem Brechungsindex n > 1,8 sind aus TiO₂ mit einer Schichtdicke zwischen 100 nm und 140 nm, vorzugsweise mit einer Schichtdicke von etwa 120 nm, gebildet.

Jedes Schichtpaket auf beiden Seiten weist bevorzugt eine Gesamtschichtdicke von wenigstens 800 nm auf (insbesondere von ca. 840 nm). Dies ist unter Haltbarkeitsaspekten eine verhältnismäßig hohe Gesamtschichtdicke für einen Schichtstapel; der im Rahmen der Erfindung verwendete Schichtstapel erwies sich jedoch als ausreichend robust.

Jedes Schichtpaket - in der Reihenfolge jeweils ausgehend von der Basis -kann bevorzugt den nachfolgend in **Tabelle 2** dargestellten Aufbau aufweisen, wobei beide Schichtpakete an beiden Seiten auch unterschiedlich (aber auch im Wesentlichen identisch) ausgebildet sein können, und wobei zusätzlich weitere Schichten vorgesehen sein können, und die genannten bevorzugten Schichtdicken weiterhin um ± 20% variieren können, und wobei die Schichten aus TiO₂ bevorzugt als Kaltsubstrat aufgebracht sind:

**(Tabelle 2)**

| **Schicht Nr.** | **Material** | **Brechungsindex** | **bevorzugte Schichtdicke [nm]** |
|---|---|---|---|
| 1 | ZrO₂ | 2,068 | 18,0 |
| 2 | SiO₂ | 1,472 | 27,0 |
| 3 | TlO₂ | 2,2 | 120,0 |
| 4 | SiO₂ | 1,472 | 174,0 |
| 5 | TlO₂ | 2,2 | 120,0 |
| 6 | SiO₂ | 1,472 | 168,0 |
| 7 | TlO₂ | 2,2 | 120,0 |
| 8 | SiO₂ | 1,472 | 84,0 |

Nach eigenen Messungen ist eine derartige, beidseitig aufgebrachte, je 8-lagige Beschichtung in der Lage, ca. 68% des IR-A Spektrums zu reflektieren bzw. zu absorbieren, so dass nur noch 32% ins Auge gelangen. Im relevanten Bereich der IR-B Strahlung zwischen 1400 und 2000nm wird mit dieser im Ausführungsbeispiel eine Reduktion um 51% erreicht.

Selbstverständlich können die entsprechenden Brillengläser (in beiden Varianten) auch weitere Beschichtungen zu anderen Zwecken, z.B. zur Erhöhung der Kratzfestigkeit, zur Verbesserung der elektrostatischen Eigenschaften oder zu einer Hydrophobierung aufweisen, insbesondere eine Hartlack-, Antistatik- und superhydrophobe Beschichtung. Diese Schichten können sowohl oberhalb als auch unterhalb des genannten Filter-Schichtenpakets angeordnet sein. Insbesondere kann - vorzugsweise beidseitig - eine Hartlackschicht direkt auf dem Brillenglas als Basis für das vorstehend beschriebene Filterschichtenpaket, dann eine Antistatikschicht und als Oberflächenversiegelung eine Hydrophobierungsschicht vorgesehen sein.

Die Brillengläser können selbstverständlich außerdem (in beiden Varianten) verschiedene refraktive Eigenschaften zur optischen Korrektur von Fehlsichtigkeiten aufweisen, wie im Stand der Technik bekannt.

Weiterhin wird erfindungsgemäß die Verwendung eines Brillenglases mit einem getönten Basismaterial mit einer Tönung mit einer durchschnittlichen Absorption von mehr als 50% im sichtbaren Bereich und einer Infrarot-reflektierenden Schutzbeschichtung (insbesondere Infrarot-A- und Infrarot-B-reflektierend, wie vorstehend beschrieben) für eine Sonnenschutzbrille vorgeschlagen.

Dabei wird berücksichtigt, dass aufgrund der weit geöffneten Pupillen aufgrund der normalerweise im Sichtbaren wirksamen Tönung der Sonnenbrille Infrarotstrahlung verstärkt in das Auge gelangen kann und dieses schädigen kann.

Ein weiterer Aspekt der Erfindung betrifft die Nachsorge nach Katarakt-Operationen mit dem Einsetzen einer künstlichen Augenlinse.

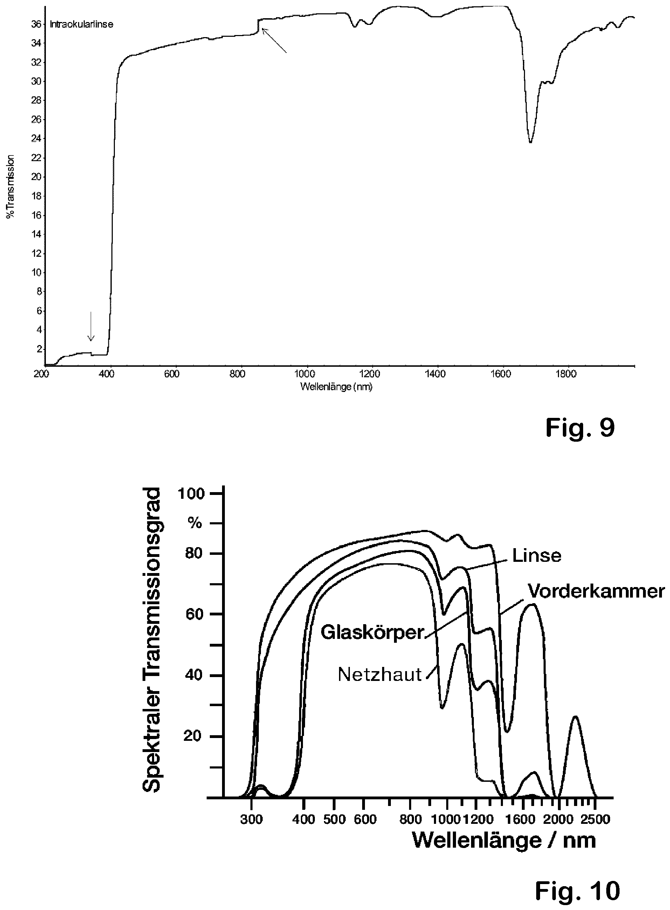

Wie eine konkrete Messung an einer marktüblichen Intraokularlinse gemäß Figur 9 ergeben hat (die in Figur 9 vorhandenen beiden Pfeile bezeichnen zwei messtechnikbedingte Sprünge in den Transmissionswerten, die als Artefakte anzusehen sind), ist die Transmission dieser künstlichen Intraokularlinse ab ca. 400 nm in etwa konstant, bis auf einen materialbedingten kleineren Einbruch bei >1600 nm.

Betrachtet man die in Figur10 dargestellte spektrale Absorptionswirkung einzelner "natürlicher" Augenbestandteile dazu im Vergleich, so sieht man, dass eine natürliche Augenlinse bei etwas unter 1000 nm eine deutliche Abnahme der Transmission hat.

Somit wird durch den Ersatz der natürlichen durch eine künstliche Augenlinse (bezogen jeweils auf die Transmissionsverhältnisse im Sichtbaren; absolut unterscheiden sich die Transmissionsgrade bei beiden Linsen) in Relation deutlich mehr Infrarotlicht ab ca. 1000 nm durchgelassen, als es bei einer natürlichen Augenlinse der Fall wäre.

Um die bislang - nach Kenntnis des Erfinders - nicht bekannte Folgewirkung der Kataraktoperation auszugleichen, wonach das durch die Operation und das Lebensalter sowieso belastete Auge nach der Operation auch stärkerer IR-B-Strahlung ausgesetzt wird, wird im Rahmen der vorliegenden Erfindung eine Verwendung eines getönten oder ungetönten Brillenglases nach einem der vorhergehenden Ansprüche, wobei das Brillenglas eine IR-A und IR-B-Strahlung (zumindest in einem Teilbereich) absorbierende Schutzbeschichtung aufweist, für eine Sehhilfe für Personen, die über eine künstliche Augenlinse nach Kataraktoperation verfügen, vorgeschlagen.

Die Erfindung wird nachfolgend anhand der Zeichnungen beispielhaft näher erläutert. Es zeigen:
- Figur 1: eine wellenlängenabhängige Reflektanzkurve für ein erfindungsgemäßes Brillenglas mit Interferenzschichtstapel;
- Figur 2: eine schematische, nicht maßstäbliche Darstellung des Schichtaufbaus, der der Messung gemäß Figur 1 zugrunde gelegen haben könnte;
- Figuren 3,4: weitere Reflektanz- und Transmissionskurven von erfindungsgemäßen Brillengläsern mit Interferenzfilterung;
- Figur 5: eine Transmissionskurve eines erfindungsgemäßen Brillenglases mit Interferenzfilterung;
- Figur 6: Transmissionskurven erfindungsgemäßer Brillengläser mit Interferenzfilterung mit verschiedenen Tönungen und ohne Tönung in einem erweiterten Spektralbereich, einschließlich eines Teilbereichs des Infrarot-B;
- Figur 7: eine spektrale Transmissionskurve (bis 1600 nm) eines Brillenglases mit Chrom-Metallschicht mit einem Schichtaufbau gemäß der obigen Tabelle 2;
- Figuren 8a,b: beispielhafte Brechungsindex- (n) und Absorptionskoeffizientenverläufe (k) für dünne Chrom- oder Silberschichten;
- Figur 9: eine vermessene spektrale Transmissionskurve für eine marktübliche Intraokularlinse, einzusetzen nach Kataraktoperation;
- Figur 10: typische spektrale Transmissionskurven der einzelnen Komponenten eines menschlichen Auges; und
- Figur 11a-d: Diagramme, in denen die Filterwirkung eines Brillenglases mit Interferenz-Schichtenfilter auf die einzelnen Transmissionskomponenten eines menschlichen Auges illustriert werden.

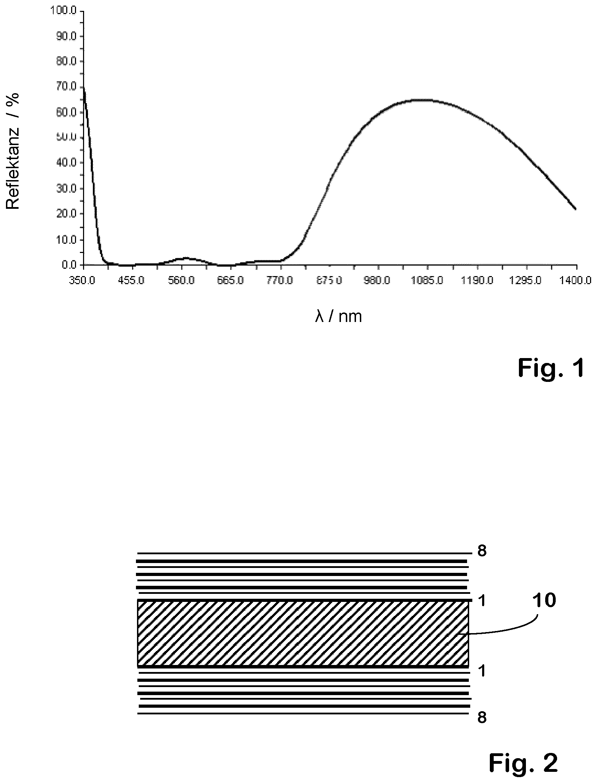

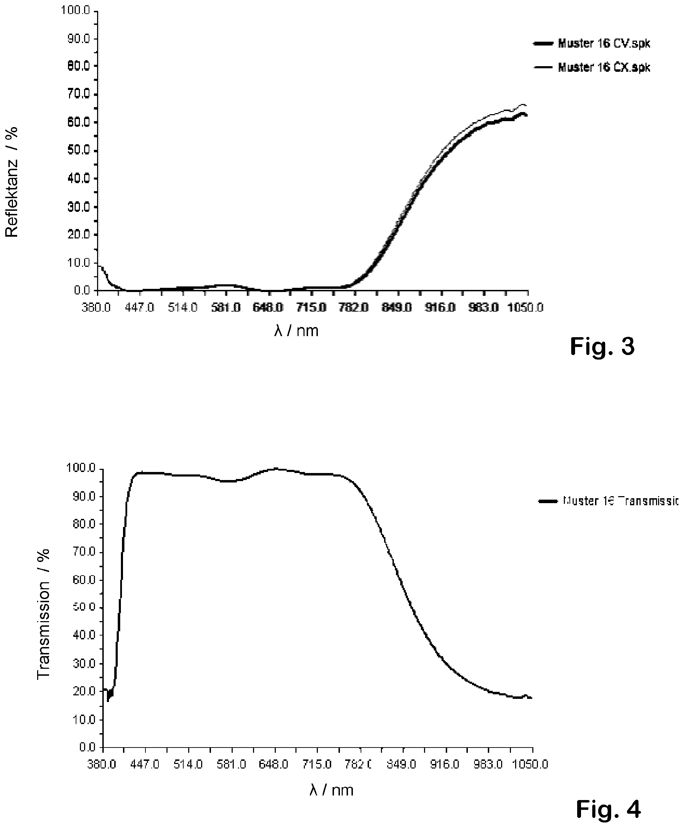

Wie aus Figur 1 und den weiteren Reflektanz- und Transmissionskurven der Figuren 3 bis 5 ersichtlich, kann mit dem vorstehend erläuterten Beschichtungsaufbau beidseitig eines Substrats (siehe das Ausführungsbeispiel aus Tabelle 2) eine sehr gute Unterdrückung (Reflexion) des für das Auge besonders kritischen IR-A-Bereichs zwischen ca. 780 nm und ca. 1400 nm erzielt werden.

Aber auch Strahlung im UV-Bereich wird sehr wirksam absorbiert, wobei der Einfluss der Beschichtungen im Bereich des blauen Lichtes (ca. 410 nm bis 460 nm) dagegen sehr gering ist, so dass die Farbwiedergabe dieser Brillengläser nicht negativ beeinflusst wird.

Der entsprechende Schichtaufbau ist in Figur 2 - grob schematisch und in keinster Weise maßstäblich - angedeutet, wobei auch noch durchaus weitere Beschichtungen vorgesehen sein können (z.B. kratzfeste Schichten oder Entspiegelungen).

Das Brillenglas gemäß Figur 2 (vgl. auch das Ausführungsbeispiel gemäß obiger Tabelle 2) besteht aus einer Basis 10 aus einem Polymermaterial, auf das auf beiden Seiten die mit 1 ... 8 angedeuteten Beschichtungen aufgebracht sind. Die erste Schicht 1 besteht jeweils aus ZrO₂. Hiernach wechseln sich SiO₂ und TiO₂ jeweils ab.

In den Diagrammen gemäß den Figuren 1, 3 und 4 sind die Reflektanz-/Transmissionsvariationen ausschließlich im typischen IR-A-Bereich bis 1400 nm gezeigt.

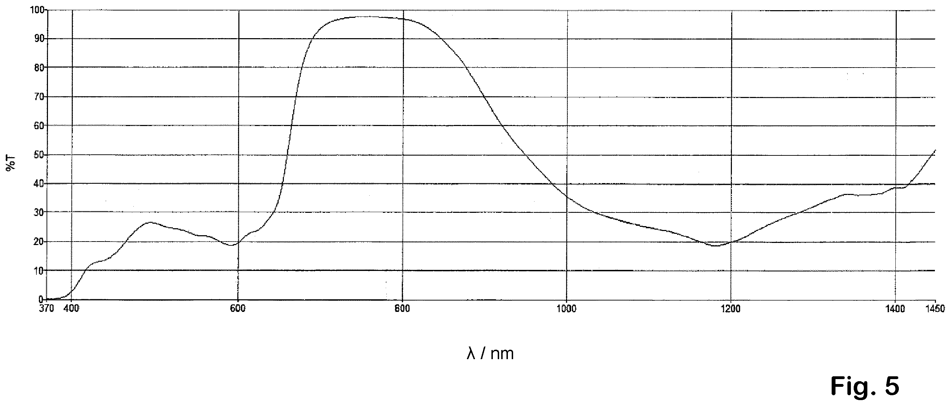

Figur 5 reicht darüber hinaus bis 1450 nm und damit geringfügig in den IR-B-Bereich hinein.

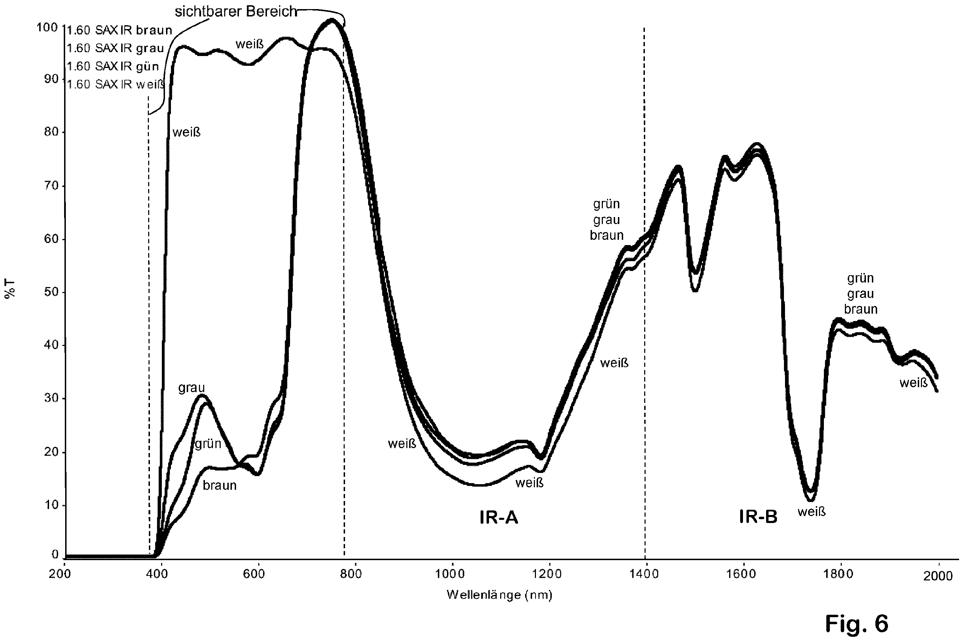

Weiter in den IR-B-Bereich reicht das Transmissionsdiagramm gemäß Figur 6. Die Messungen gemäß Figur 6 erfolgten für organische Brillengläser mit einem Brechungsindex von n = 1,60 in verschiedenen Tönungen, nämlich grau, grün und braun (jeweils 85% Tönung) sowie ungetönt ("weiß"), wobei die Brillengläser erfindungsgemäß beschichtetet und bei näherungsweise mittiger Durchstrahlung in einem UV/VISNIR-Spektrometer vermessen wurden. Der Messbereich betrug 200 nm bis 2000 nm. Die spektrale Auflösung betrug im UVNis-Bereich 1 nm und im NIR-Bereich 4 nm.

Die Transmissionskurven der getönten Gläser (grau, grün, braun) liegen, wie ersichtlich, relativ nahe aneinander und unterscheiden sich deutlich nur im Bereich unterhalb von 600 nm; in den höheren Wellenlängenbereichen liegen die Kurven teilweise übereinander.

Stärkere Abweichungen zu den übrigen Kurven bestehen bei dem "weißen" Glas, das im Grenzbereich zum UV einen sehr steilen Transmissionsanstieg auf über 90% Transmission aufweist, so dass trotz hochwertigem UV-Schutz das Farbempfinden in diesem hochfrequenten Wellenlängenbereich - abgesehen von den erwartungsgemäßen und deutlich erkennbaren Modifikationen durch die jeweiligen Tönungen - nicht beeinträchtigt wird.

Wie aus Figur 6 ersichtlich, sind auch im IR-B-Bereich - zumindest im Bereich bis 2000 nm - immer noch deutlich niedrigere Transmissionswerte gegeben als im sichtbaren Bereich, wobei der Transmissionsverlauf relativ stark variiert, insbesondere mit mehreren lokalen Maxima und einem deutlich ausgeprägten Minimum (letztlich kommt es bei der langwelligeren Strahlung eher auf den Gesamtenergieeintrag in das Auge als auf die lokalen Strahlungsmaxima an). In diesem Wellenlängenbereichen spielt die Tönung - wie schon erwähnt - praktisch keine signifikante Rolle mehr.

Im Mittel beträgt die Transmission im Bereich 1400 nm bis 2000 nm 75% oder geringer, vorzugsweise 60% oder geringer, besonders bevorzugt 55% oder geringer (im Ausführungsbeispiel 51%), jeweils ohne Berücksichtigung einer möglichen Glastönung.

Somit ist erfindungsgemäß auch ein Schutz im IR-B-Bereich realisiert.

Figur 7 zeigt eine Transmissionskurve für ein mit einer Chromschicht (60-80 Angström) gemäß dem Schichtaufbau in Tabelle 1 versehenes Brillenglas. Wie ersichtlich, reicht im Gegensatz zu gefärbten Brillengläsern die Filterwirkung bis weit in den IR-B-Bereich hinein, wobei die Kurve relativ konstant ist und bei ca. 1600 nm (basismaterialbedingt) einen kleineren Einbruch aufweist.

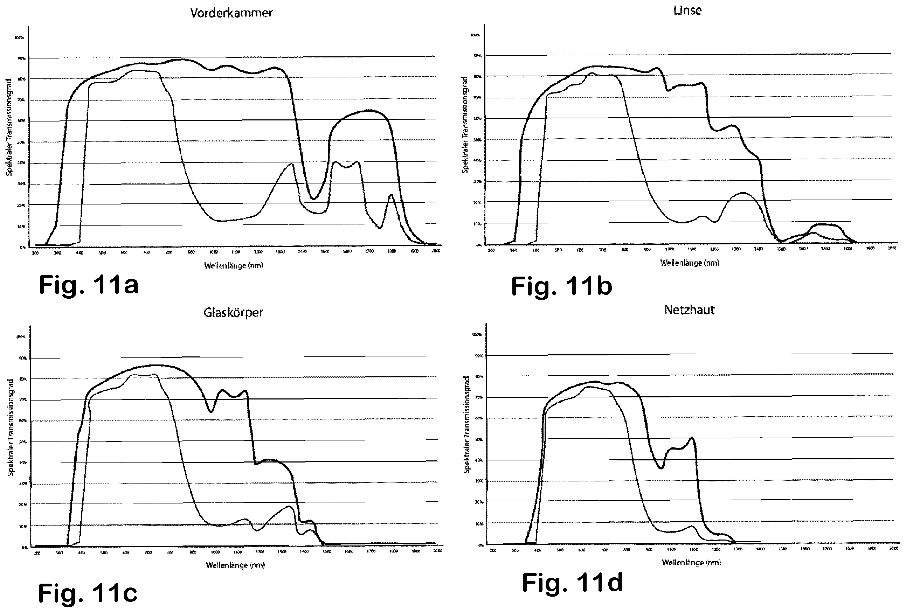

Figur 11 zeigt - basierend auf dem üblichen Transmissionsverhalten der natürlichen Komponenten des menschlichen Auges - wie ein erfindungsgemäßes Brillenglas mit Interferenzfilter (Alternative (b), Schichtaufbau vgl. Tabelle 2) die einzelnen Kurven beeinflusst. Die jeweils niedrigere Kurve (d.h. geringere Transmission) entspricht der Faltung der Kurve entsprechend Figur 6 mit der Transmissionskurve des jeweils angegebenen Augenkomponente, d.h. Fig. 11a Vorderkammer, Fig. 11b Linse, Fig. 11c Glaskörper und Fig. 11d Netzhaut. Auch aus diesen Diagrammen, insbesondere den Fig. 11a und 11b, ist zu ersehen, dass die natürliche Linse den IR-B-Eintrag in die dahinterliegenden Augenstrukturen normalerweise begrenzt, was bei einer künstlichen Intraokularlinse nicht mehr in dieser Weise der Fall ist.s

## Patentansprüche

1. Brillenglas, mit einer vorzugsweise organischen oder mit einer mineralischen Brillenglas-Basis,
**dadurch gekennzeichnet, dass**
das Brillenglas eine Beschichtung zum Schutz vor Infrarotstrahlung, insbesondere vor Infrarot-A-Strahlung und - zumindest in einem Teilbereich - vor Infrarot-B-Strahlung aufweist,
wobei entweder
a) zur Bereitstellung eines getönten Brillenglases mit zusätzlicher Schutzwirkung im IR-A- und IR-B-Bereich eine Metallschicht auf dem Brillenglas aufgebracht ist,
- wobei die Metallschicht optional ganz oder teilweise in oxidischer Form, ggf. mit Oxiden in unterschiedlichen Oxidationsstufen, vorliegen kann,
- wobei die Metallschicht in einem Wellenlängenbereich zwischen 550 nm und1000 nm einen optischen Absorptionskoeffizienten *κ* ≥ 1 aufweist, und
- wobei die Dicke der Metallschicht zwischen 0,5 nm bis 20,0 nm beträgt,
wobei eine spiegelnde Wirkung der Metallschicht durch wenigstens eine auf dem Brillenglas aufgebrachte Antireflex-Beschichtung wenigstens teilweise wieder aufgehoben wird,
oder
b) wobei zur Bereitstellung eines getönten oder eines ungetönten Brillenglases mit zusätzlicher Schutzwirkung im IR-A- und IR-B-Bereich, ein jeweils auf beide Seiten - der ggf. getönten - Brillenglas-Basis aufgebrachter Interferenz-Schichtenstapel vorgesehen ist, wobei jeder Schichtenstapel wenigstens acht übereinanderliegende Schichten aufweist, und wobei jeder Schichtenstapel jeweils abwechselnd eine Schicht aus einem Material mit einem hohen Brechungsindex n > 1,8 und eine Schicht aus einem Material mit einem niedrigen Brechungsindex n < 1,65 aufweist, wobei jede Schicht eine Dicke zwischen 10 nm und 200 nm aufweist, derart,
dass durch die gesamte Beschichtung auf beiden Seiten ein Reflexionsgrad - gemessen senkrecht zur Glasoberfläche - über den Wellenlängenbereich der Infrarot-A-Strahlung von 780 nm bis 1400 nm von durchschnittlich wenigstens 30 %, mit einem Reflexionsgradmaximum in diesem Wellenlängenbereich von wenigstens 50%, erreicht wird und dass
in einem Teilbereich des IR-B-Spektralbereichs zwischen 1400 nm und 2000 nm - ohne Berücksichtigung einer möglichen Tönung - bei näherungsweise mittiger Durchstrahlung im Mittel ein Transmissionsgrad von 75% oder geringer, vorzugsweise von 60% oder geringer, besonders bevorzugt von 55% oder geringer, gegeben ist.

2. Brillenglas nach Anspruch 1,
**dadurch gekennzeichnet, dass**
die Metallschicht gemäß Alternative (a) aus Chrom, optional enthaltend ein oder mehrere Chromoxide CrO, Cr₂O₃, CrO₂, CrO₃, gebildet ist, mit einer Schichtdicke von 0,5 nm bis 20,0 nm, besonders bevorzugt mit einer Schichtdicke von 2,0 nm bis 9,0 nm, ganz besonders bevorzugt mit einer Schichtdicke von 6,0 nm bis 8,0 nm, oder,
dass die Metallschicht gemäß Alternative (a) aus Silber, optional enthaltend Silberoxide, oder aus Titan oder aus einem Titanoxid, insbesondere aus Ti₂O₅, gebildet ist.

3. Brillenglas nach Anspruch 1 oder 2,
**dadurch gekennzeichnet, dass**
der Schichtaufbau der Alternative (a) auf einer Brillenglasbasis wie folgt ist:
(i) die Metallschicht ist auf die Innenseite der Brillenglasbasis aufgebracht,
(ii) optional ist weiter nach innen hin - folgend auf die Metallschicht - ein Interferenz-Schichtenstapel zur Implementierung einer gewünschten farblichen Anpassung der durch die Metallschicht vorgegebenen Tönung vorgesehen,
(iii) nach innen hin folgend ist ein Interferenz-Schichtenstapel vorgesehen, der die Antireflex-Beschichtung implementiert, und
(iv) optional ist abschließend eine Schutzbeschichtung vorgesehen.

4. Brillenglas nach einem der Ansprüche 1 bis 3,
**dadurch gekennzeichnet, dass**
die Brillenglasbasis gemäß Alternative (a) zur Erzielung eines homogenen farblichen Gesamteindrucks zusätzlich tauchgefärbt ist, und/oder,
dass die Brillenglasbasis gemäß Alternative (a) zur Erzielung stärkerer Tönungen und/oder zur Erzielung von Farbverläufen zusätzlich mit einer durchgefärbten Tönung versehen ist.

5. Brillenglas nach einem der Ansprüche 1 bis 4,
**dadurch gekennzeichnet, dass**
auf der Brillenglasbasis gemäß Alternative (a) folgender Schichtaufbau, ausgehend von der Basis zur inneren Seite hin, vorgesehen ist, wobei weitere Schichten innenseitig oder auf der Außenseite des Glases vorgesehen sein können, und wobei die genannten bevorzugten Schichtdicken um ± 20% variieren können:
| **Schicht Nr.** | **Material** | **bevorzugte Schichtdicke [nm]** |
|---|---|---|
| 1 | Chrom | 6,0-8,0 |
| 2 | SiO₂ | 45,1 |
| 3 | TiO₂ | 10,0 |
| 4 | SiO₂ | 50,5 |
| 5 | TiO₂ | 10,0 |
| 6 | SiO₂ | 12,9 |
| 7 | TiO₂ | 9,5 |
| 8 | SiO₂ | 106,9 |
| 9 | ZrO₂ | 14,1 |
| 10 | SiO₂ | 70,3 |
| 11 | ZrO₂ | 67,3 |
| 12 | SiO₂ | 113,0 |
| 13 | "Topcoat" | 10,0 |

6. Brillenglas nach Anspruch 1,
**dadurch gekennzeichnet, dass**
das Basismaterial, bei dem es sich bevorzugt um ein Polymermaterial handelt, für die Realisierung der optionalen Tönung in Zusammenhang Alternative (b) eine sichtbares Licht absorbierende Färbung mit einem grauen, braunen oder grünen Farbton aufweist, die eine durchschnittliche Absorption von wenigstens 50%, vorzugsweise von mehr als 80%, besonders bevorzugt von ca. 85 % im sichtbaren Wellenlängenbereich bewirkt.

7. Brillenglas nach einem der Anspruch 1 oder 6,
**dadurch gekennzeichnet, dass**
die unmittelbar an die Brillenglasbasis angrenzende Schicht jeweils aus ZrO₂ mit einer Schichtdicke zwischen 5 nm und 50 nm gebildet ist, und dass die übrigen Schichten mit hohem Brechungsindex n > 1,8 aus TiO₂ mit einer Schichtdicke zwischen 100 nm und 140 nm, vorzugsweise mit einer Schichtdicke von etwa 120 nm, gebildet sind.

8. Brillenglas nach einem der Ansprüche 1, 6 oder 7,
**dadurch gekennzeichnet, dass**
jedes Schichtpaket auf beiden Seiten eine Gesamtschichtdicke von wenigstens 800 nm aufweist.

9. Brillenglas nach einem der Ansprüche 1 oder 6 bis 8,
**dadurch gekennzeichnet, dass**
jedes Schichtpaket - in der Reihenfolge jeweils ausgehend von der Basis - folgenden Aufbau aufweist, wobei beide Schichtpakete unterschiedlich ausgebildet sein können, und wobei weitere Schichten vorgesehen sein können, und die genannten bevorzugten Schichtdicken weiterhin um ± 20% variieren können, und wobei die Schichten aus TiO₂ bevorzugt als Kaltsubstrat aufgebracht sind:
| **Schicht Nr.** | **Material** | **bevorzugte Schichtdicke [nm]** |
|---|---|---|
| 1 | ZrO₂ | 18,0 |
| 2 | SiO₂ | 27,0 |
| 3 | TlO₂ | 120,0 |
| 4 | SiO₂ | 174,0 |
| 5 | TlO₂ | 120,0 |
| 6 | SiO₂ | 168,0 |
| 7 | TlO₂ | 120,0 |
| 8 | SiO₂ | 84,0 |

10. Brillenglas nach einem der Ansprüche 1 bis 9,
**dadurch gekennzeichnet, dass**
Schichten mit niedrigem Brechungsindex n < 1,65 aus einem oder mehreren Materialien aus der Gruppe von Materialien, gebildet aus SiO₂, MgF₂, Al₂O₃, LaF₃ oder einer Mischung dieser Materialien, vorzugsweise aus SiO₂, gebildet sind, und/oder, dass
Schichten mit hohem Brechungsindex n > 1,8 aus einem oder mehreren Materialien aus der Gruppe von Materialien gebildet aus Oxiden, Nitriden oder Oxinitriden der Stoffe Zr, Ti, Sb, In, Sn, Ta, Nb, Hf oder einer Mischung dieser Materialien, vorzugsweise aus ZrO₂ oder TiO₂, gebildet sind, wobei zwischen einen oder mehreren der Schichten mit niedrigem und hohen Brechungsindex optional zusätzlich Zwischenschichten mit einem mittleren Brechungsindex vorgesehen sein können.

11. Brillenglas nach einem der Ansprüche 1 bis 10,
**dadurch gekennzeichnet, dass**
der bei Alternative (a) oder (b) senkrecht zur Glasoberfläche gemessene, durch die Beschichtung auf beiden Seiten insgesamt bedingte Reflexionsgrad im Wellenlängenbereich des sichtbaren blauen Lichts zwischen 410 nm und 460 nm - ohne Berücksichtigung einer möglichen Glastönung - den Wert 10%, vorzugsweise den Wert 5%, nicht übersteigt, d.h. der Transmissionsgrad - ohne Berücksichtigung einer möglichen Glastönung - in diesem Wellenlängenbereich bei 90% oder höher, vorzugsweise bei 95% oder höher, liegt.

12. Verwendung eines getönten Brillenglases nach einem der vorhergehenden Ansprüche mit einer Tönung mit einer durchschnittlichen Absorption im sichtbaren Bereich von mehr als 50%, wobei das Brillenglas eine Infrarot-A und Infrarot-B-Strahlung absorbierende Schutzbeschichtung aufweist, für eine Sonnenschutzbrille.

13. Verwendung eines getönten oder ungetönten Brillenglases nach einem der Ansprüche 1 bis 11, wobei das Brillenglas eine IR-A und IR-B-Strahlung absorbierende Schutzbeschichtung aufweist, für eine Sehhilfe für Personen, die über eine künstliche Augenlinse nach Kataraktoperation verfügen.
